# FASCICULE DE BREVET EUROPEEN

(11) **EP 4 061 727 B1**
(45) Date de publication et mention de la délivrance du brevet: **31.01.2024**
(21) Numéro de dépôt: 20817031.6
(22) Date de dépôt: 08.12.2020
(51) Int. Cl.: B64G 1/22, B64G 1/66, B64G 4/00, H01Q 1/12, H01Q 1/28, H01Q 3/04, H01Q 3/06, H01Q 3/08, H01Q 15/14

(54) **DISPOSITIF D'ORIENTATION D'UNE CHARGE SELON DEUX AXES DE ROTATION ORTHOGONAUX**
VORRICHTUNG ZUM AUSRICHTEN EINER LAST IN ZWEI ORTHOGONALEN DREHACHSEN
DEVICE FOR ORIENTING A LOAD IN TWO ORTHOGONAL AXES OF ROTATION

(30) Priorité: 18.12.2019 FR 1914747
(43) Date de publication de la demande: 28.09.2022
(73) Titulaire: Airbus Defence and Space SAS, 31402 Toulouse Cedex 4 (FR); Centre National d'Etudes Spatiales (CNES), 75001 Paris (FR)
(72) Inventeur: BLAIS, Thierry, 31402 Toulouse cedex 4 (FR); GOSSANT, Alain, 31402 Toulouse cedex 4 (FR); PIRES, Victor, 31130 Flourens (FR)
(74) Mandataire: Ipside
(86) Numéro de dépôt international: PCT/EP2020/085004
(87) Numéro de publication internationale: WO 2021/122137

(56) Documents cités:
- FR-A1- 2 367 578
- FR-A1- 2 704 515
- FR-A1- 2 903 751
- US-A1- 2017 158 357

## Description

### Domaine de l'invention

La présente invention se rapporte à un dispositif d'orientation d'une charge permettant d'orienter ladite charge selon deux axes de rotation orthogonaux. La présente invention concerne notamment des dispositifs d'orientation de charge destinés à être embarqués dans des véhicules spatiaux tels que ceux utilisés dans des satellites, des sondes spatiales,...

### Etat de la technique

Dans de nombreux domaines, notamment ceux de l'aérospatial et des télécommunications, certaines charges utiles utilisées doivent être orientées avec une grande précision, si possible selon deux directions orthogonales. Ces charges utiles sont par exemples des miroirs, des réflecteurs radiofréquences,.... Ces charges utiles sont généralement associées à un dispositif d'orientation conçu pour supporter et placer celles-ci dans une position déterminée.

Pour réaliser un dispositif d'orientation d'une charge selon deux axes de rotation orthogonaux, les architectures existantes, dites séries, sont basées sur l'empilement de deux axes indépendants.

Un premier ensemble est mobile en rotation autour d'un premier axe de rotation, fixe par rapport au véhicule porteur, et un second ensemble, porteur de la charge utile, est mobile en rotation autour d'un second axe de rotation. Ce second axe de rotation est porté par le premier ensemble et lui est orthogonal. Ces deux ensembles constituent ce que l'on appelle communément une articulation de type cardan, et sont entraînés chacun par un actionneur.

Ces architectures séries présentent de nombreux inconvénients. En particulier, elles impliquent de fortes masses embarquées sur le premier axe de rotation. Ces masses, mobiles, génèrent de fortes contraintes mécaniques sous l'effet de gravité (que ce soit pour les applications sol ou les applications spatiales lors des tests au sol) et pire encore pour des applications satellitaires, sous l'effet des environnements mécaniques (vibrations du lanceur). Le fonctionnement sous gravité, combiné à des défauts de centrage - par conception ou par fabrication - implique des couples parasites perturbant les actionneurs, pouvant nécessiter le surdimensionnement des actionneurs et des moyens de compensation de gravité. Ce surdimensionnement présente ainsi un coût de réalisation et un encombrement non négligeable.

De plus, de telles architectures séries peuvent s'avérer inadaptées quant aux grandeurs de balayage obtenus sur les deux axes. En effet, les architectures séries sont conçues pour permettre la réalisation de grands balayages sur chacun des deux axes, ce qui n'est pas nécessaire pour certaines applications. Dans certains cas, tels que par exemple pour l'orientation de miroirs, seul un grand balayage (jusqu'à 360°) est nécessaire sur le premier axe de rotation et un petit balayage (généralement inférieur à 10°) sur le deuxième axe de rotation.

Le document FR 2903751 A1 divulgue un dispositif d'orientation d'une charge utile connu.

### Exposé de l'invention

La présente invention a pour objet de pallier ces inconvénients.

L'invention a pour but de proposer une architecture plus efficace et robuste, notamment pour les applications spatiales, comparée aux architectures traditionnelles, pour assurer deux degrés de mobilité en rotation d'une charge.

A cet effet, il est proposé par la présente invention un dispositif d'orientation d'une charge, auquel est associé un repère dispositif orthonormé XYZ, de centre 0. Le dispositif d'orientation est destiné à orienter ladite charge autour d'un axe longitudinal X, dit axe principal, et d'un axe transversal Y, dit axe secondaire. Le dispositif d'orientation comporte :
- un premier arbre, dit arbre de transmission, destiné à supporter ladite charge, configuré pour être entraîné en rotation, au centre 0, autour de l'axe principal et de l'axe secondaire,
- un deuxième arbre, configuré pour être entraîné en rotation autour de l'axe principal,
- un troisième arbre configuré pour être entraîné en rotation autour d'un troisième axe de rotation, de même direction que l'axe principal X,
- un premier organe de liaison entre l'arbre de transmission et le deuxième arbre, configuré pour interdire des mouvements relatifs entre ledit arbre de transmission et ledit deuxième arbre suivant d'une part un degré de liberté en rotation autour de l'axe principal X et d'autre part trois degrés de liberté en translation,
- un deuxième organe de liaison entre l'arbre de transmission et le troisième arbre et configuré pour autoriser des mouvements relatifs entre ledit arbre de transmission et ledit troisième arbre suivant d'une part un degré de liberté de translation le long du troisième axe de rotation et d'autre part trois degrés de liberté en rotation,
le deuxième organe de liaison, l'arbre de transmission et le troisième arbre formant une liaison cinématique de type excentrique.

L'invention trouve une application particulière dans le domaine spatiale, pour l'orientation d'une charge utile selon deux axes de rotation perpendiculaires. Cette charge utile peut être un miroir pour les instruments optiques, un réflecteur RF pour les applications sondeurs micro-onde ou antenne RF, voire un instrument complet.

Ce dispositif d'orientation trouve également d'autres applications hors du domaine spatial.

L'architecture proposée est particulièrement avantageuse pour des cinématiques non isotropes, c'est-à-dire impliquant un axe avec un grand débattement angulaire (capacité de rotation infinie ; rotation propre) et un deuxième axe avec un débattement angulaire plus faible (quelques degrés pour le basculement).

Selon des modes de réalisation particuliers, le dispositif selon l'invention répond en outre aux caractéristiques suivantes, mises en oeuvre séparément ou en chacune de leurs combinaisons techniquement opérantes.

Dans des modes de réalisation préférés, le deuxième arbre et le troisième arbre sont des arbres creux traversés par l'arbre de transmission.

Dans des exemples de réalisation préférés, le premier organe de liaison est un ensemble d'éléments flexibles.

Dans des modes de réalisation préférés, le deuxième organe de liaison comporte un pivot, excentré par rapport au troisième axe de rotation du troisième arbre, monté sur une membrane, ledit pivot étant fixement solidaire de l'arbre de transmission et ladite membrane fixement solidaire dudit troisième arbre.

Le premier organe de liaison et le pivot du deuxième organe de liaison sont avantageusement des composants flexibles. Ce choix est justifié par les petits angles que le balayage doit faire (< ±2° pour le pivot et < ±0,2° pour le premier organe de liaison). Il est très difficile de faire les petits angles avec des roulements à billes pendant une longue durée de vie (problèmes de lubrification). De plus, ce type de composants améliore la précision d'orientation (pas de jeu et pas de frottement).

Dans une forme de réalisation, le troisième axe de rotation du troisième arbre est distinct de l'axe principal X, le pivot du deuxième organe de liaison étant positionné sur l'axe principal.

Dans une autre forme de réalisation, le troisième axe de rotation du troisième arbre est confondu avec l'axe principal X, le pivot du deuxième organe de liaison étant radialement distant dudit troisième axe de rotation.

Dans des modes de réalisation préférés, dans le cas où le troisième axe de rotation du troisième arbre est confondu avec l'axe principal X, un deuxième repère orthonormé X'Y'Z', de centre O, est associé au deuxième arbre. Les trois axes du repère X'Y'Z' de ce deuxième repère sont confondus avec les trois axes XYZ du repère dispositif, lorsque le dispositif d'orientation est en configuration initiale. Le dispositif d'orientation comporte un dispositif anti-rotation configuré pour empêcher les balayages de la charge autour de l'axe principal X et de l'axe Y', et placer le dispositif d'orientation dans une configuration non opérationnelle, dite bloquée. Cette configuration bloquée s'avère importante lorsque le dispositif d'orientation est destiné à être placé dans un véhicule spatial. Cette configuration permet de protéger le dispositif d'orientation et sa charge, lors d'une phase de lancement dudit véhicule spatial.

Dans des exemples de réalisation préférés, le dispositif anti-rotation comporte un premier ensemble configuré pour empêcher un balayage du miroir selon l'axe Y'.

Dans une forme de réalisation préférée, le premier ensemble comporte :
- deux bras, s'étendant chacun radialement depuis l'arbre de transmission vers un bâti externe dudit dispositif d'orientation, et se terminant chacun par une butée, les deux bras étant disposés dans deux plans YZ distincts,
- deux protubérances disposées sur une face interne du bâti externe, une protubérance dans chaque plan YZ contenant un bras radial.

Les butées et protubérances sont configurées de sorte que lesdites butées coopèrent, avec un faible jeu, avec lesdites protubérances du bâti externe, lorsque le dispositif d'orientation est dans la configuration bloquée.

Dans des exemples de réalisation préférés, en complément du premier ensemble, le dispositif anti-rotation comporte un second ensemble configuré pour empêcher un balayage du miroir selon l'axe principal X.

Dans une forme de réalisation préférée, le second ensemble comporte :
- une lame, flexible, s'étendant radialement depuis le troisième arbre vers un bâti externe, comportant une partie ferromagnétique en une extrémité libre,
- un élément magnétique disposé fixement sur une face interne du bâti externe.

La lame et l'élément magnétique sont positionnés dans le dispositif d'orientation de telle sorte que, lorsque les butées coopèrent avec les protubérances du premier ensemble, la lame vient en appui contre l'élément magnétique, plaçant le dispositif d'orientation dans la configuration bloquée.

### Présentation des figures

La description suivante de l'invention est faite en se référant aux figures, dans lesquelles des références identiques désignent des éléments identiques ou analogues, qui représentent de manière non limitative :
La figure 1 représente une vue en coupe, selon un plan XY, d'une première version du dispositif d'orientation d'une charge, dans une configuration initiale,
La figure 2 représente une vue en coupe, selon un plan XY, d'une deuxième version du dispositif d'orientation d'une charge, dans une configuration initiale,
La figure 3a représente un exemple d'un premier organe de liaison du dispositif d'orientation d'une charge,
La figure 3b représente une vue en coupe de l'organe de liaison de la figure 3a,
La figure 4 représente un exemple d'un pivot d'un deuxième organe de liaison du dispositif d'orientation d'une charge,
La figure 5 représente un exemple d'une membrane d'un deuxième organe de liaison du dispositif d'orientation d'une charge,
La figure 6a représente une représentation schématique de la première version du dispositif d'orientation d'une charge, dans un plan XZ, dans une configuration initiale,
La figure 6b représente une représentation schématique de la première version du dispositif d'orientation d'une charge, dans un plan XZ, illustrant une rotation de la charge autour d'un axe principal,
La figure 6c représente une autre représentation schématique de la première version du dispositif d'orientation d'une charge, dans un plan XZ, illustrant une rotation de la charge autour d'un axe principal,
La figure 6d représente une représentation schématique de la première version du dispositif d'orientation d'une charge, dans un plan XZ, illustrant une rotation de la charge autour d'un axe secondaire,
La figure 6e représente une autre représentation schématique de la première version du dispositif d'orientation d'une charge, dans un plan XZ, illustrant une rotation de la charge autour d'un axe secondaire,
La figure 7a représente une représentation schématique de la première version du dispositif d'orientation d'une charge, dans un plan YZ, dans une configuration initiale,
La figure 7b représente une représentation schématique de la première version du dispositif d'orientation d'une charge, dans un plan YZ, illustrant une rotation de la charge autour d'un axe principal,
La figure 7c représente une autre représentation schématique de la première version du dispositif d'orientation d'une charge, dans un plan YZ, illustrant une rotation de la charge autour d'un axe principal,
La figure 7d représente une représentation schématique de la première version du dispositif d'orientation d'une charge, dans un plan YZ, illustrant une rotation de la charge autour d'un axe secondaire,
La figure 7e représente une représentation schématique de la première version du dispositif d'orientation d'une charge, dans un plan YZ, illustrant une rotation de la charge autour d'un axe secondaire,
La figure 8a représente une représentation schématique de la deuxième version du dispositif d'orientation d'une charge, dans un plan XZ, dans une configuration initiale,
La figure 8b représente une représentation schématique de la deuxième version du dispositif d'orientation d'une charge, dans un plan XZ, illustrant une rotation de la charge autour d'un axe principal,
La figure 8c représente une autre représentation schématique de la deuxième version du dispositif d'orientation d'une charge, dans un plan XZ, illustrant une rotation de la charge autour d'un axe principal,
La figure 8d représente une représentation schématique de la deuxième version du dispositif d'orientation d'une charge, dans un plan XZ, illustrant une rotation de la charge autour d'un axe secondaire,
La figure 8e représente une autre représentation schématique de la deuxième version du dispositif d'orientation d'une charge, dans un plan XZ, illustrant une rotation de la charge autour d'un axe secondaire,
La figure 9a représente une représentation schématique de la deuxième version du dispositif d'orientation d'une charge, dans un plan YZ, dans une configuration initiale,
La figure 9b représente une représentation schématique de la deuxième version du dispositif d'orientation d'une charge, dans un plan YZ, illustrant une rotation de la charge autour d'un axe principal,
La figure 9c représente une autre représentation schématique de la deuxième version du dispositif d'orientation d'une charge, dans un plan YZ, illustrant une rotation de la charge autour d'un axe principal,
La figure 9d représente une représentation schématique de la deuxième version du dispositif d'orientation d'une charge, dans un plan YZ, illustrant une rotation de la charge autour d'un axe secondaire,
La figure 9e représente une autre représentation schématique de la deuxième version du dispositif d'orientation d'une charge, dans un plan YZ, illustrant une rotation de la charge autour d'un axe secondaire,
La figure 10 représente une représentation schématique de la deuxième version du dispositif d'orientation d'une charge, dans un plan XZ, dans une configuration initiale, et comportant un dispositif anti-rotation,
La figure 11 représente une représentation schématique de la deuxième version du dispositif d'orientation d'une charge, dans un plan XZ, dans une configuration bloquée, et comportant un dispositif anti-rotation,
La figure 12a représente une représentation schématique du dispositif anti-rotation illustrant son déplacement vers la configuration bloquée,
La figure 12b représente une autre représentation schématique du dispositif anti-rotation illustrant son déplacement vers la configuration bloquée,
La figure 12c représente une représentation schématique du dispositif anti-rotation en configuration bloquée.

### Description détaillée d'un mode de réalisation de l'invention

Un dispositif d'orientation 100 d'une charge selon l'invention est préférentiellement un dispositif biaxe, c'est-à-dire qu'il est adapté et configuré pour orienter (c'est-à-dire pointer) une charge 10 principalement selon deux axes de rotation perpendiculaires.

L'invention sera décrite ci-après dans le contexte particulier d'un de ses domaines d'application préférés, non limitatif, dans lequel le dispositif d'orientation 100 d'une charge est destiné à être utilisé dans un véhicule spatial, type satellite.

L'invention sera plus particulièrement décrite dans un exemple de réalisation non limitatif dans lequel la charge est une charge utile telle qu'un miroir 10.

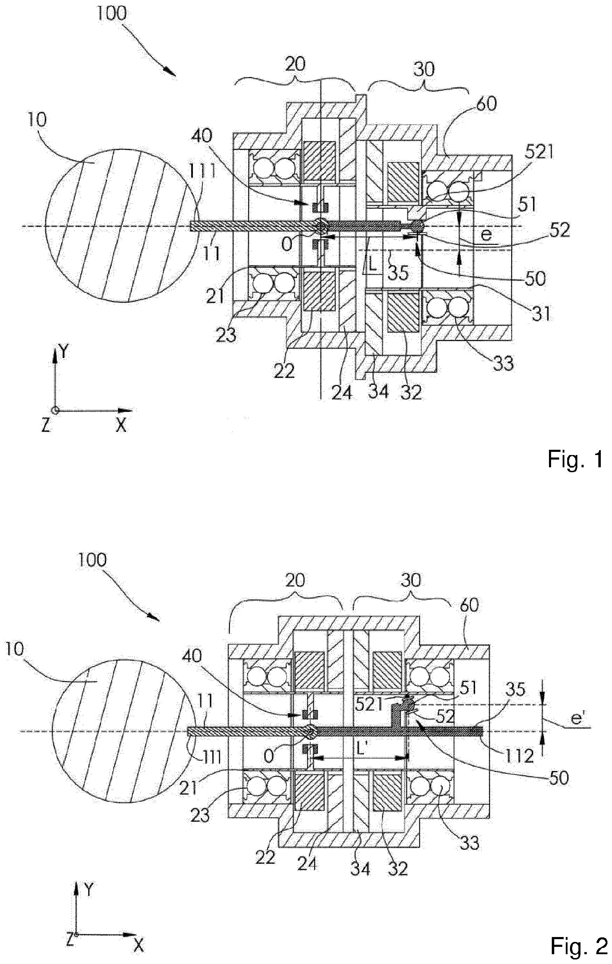

Les figures 1 et 2 illustrent schématiquement deux versions d'un dispositif d'orientation 100.

Dans la suite de la description, quelle que soit la version du dispositif d'orientation 100, on associe audit dispositif d'orientation, un repère dispositif comportant trois axes XYZ orthogonaux entre eux, et de centre 0.

Le repère dispositif est lié au dispositif d'orientation, c'est-à-dire qu'il est entièrement défini par la géométrie dudit dispositif d'orientation.

Le repère dispositif comporte :
- un axe longitudinal, dit axe principal X,
- un axe transversal, dit axe secondaire Y, perpendiculaire à l'axe principal,
- un troisième axe, dit axe tertiaire Z, perpendiculaire aux deux axes précédents.

Les figures 1 et 2 présentent le dispositif d'orientation dans un plan XY, c'est-à-dire un plan formé par les axes X et Y du repère dispositif, dans une configuration dite initiale.

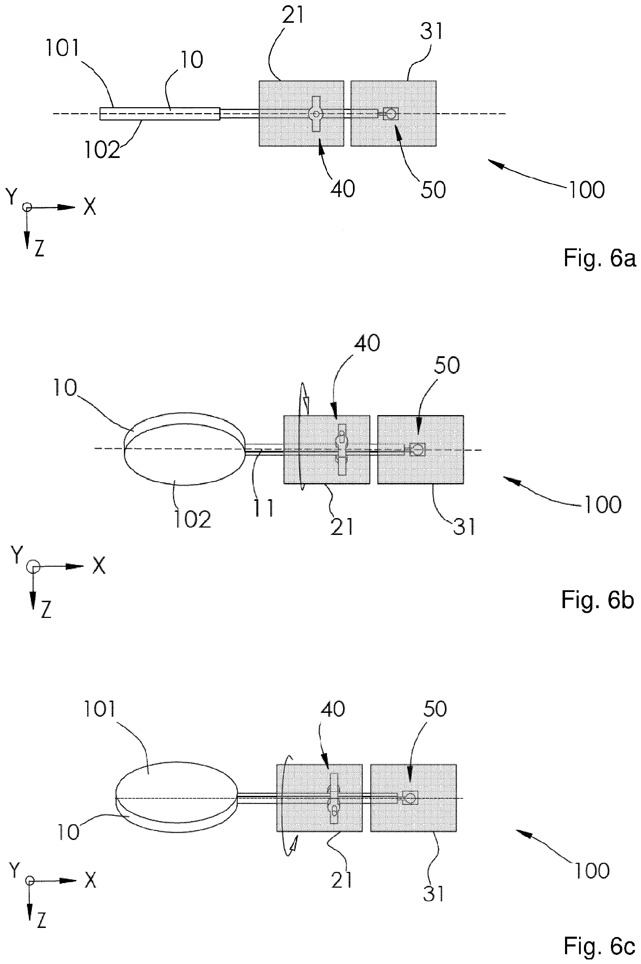

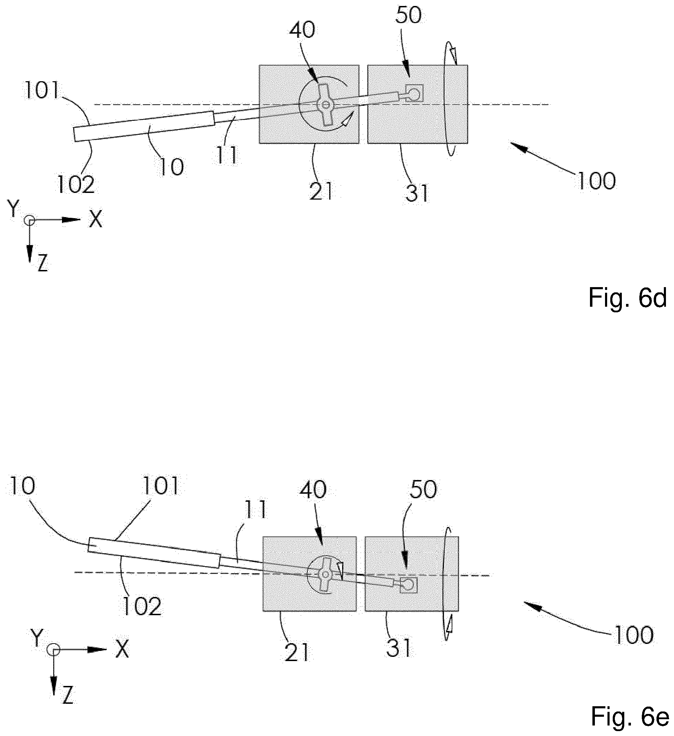

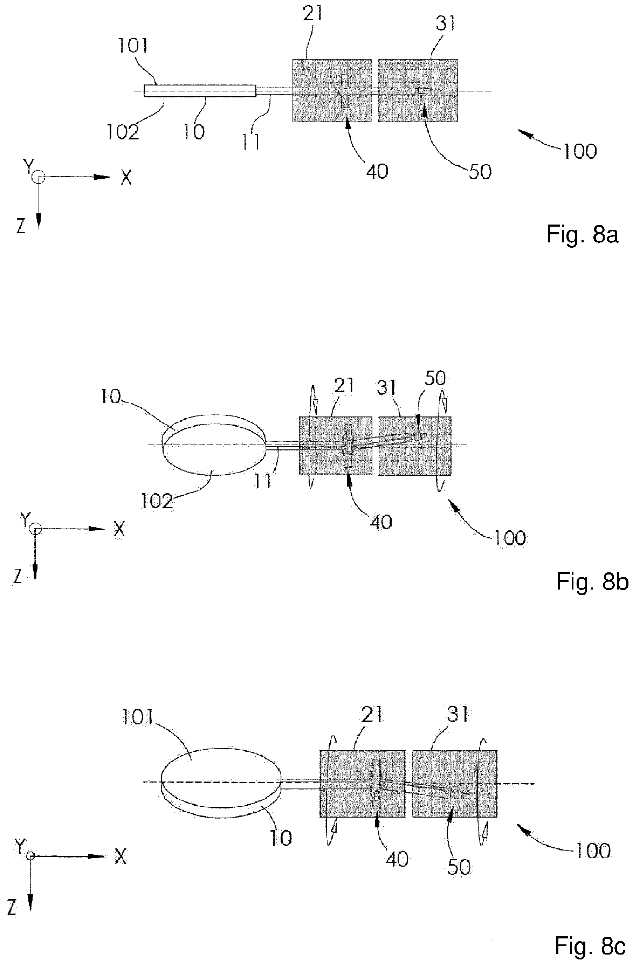

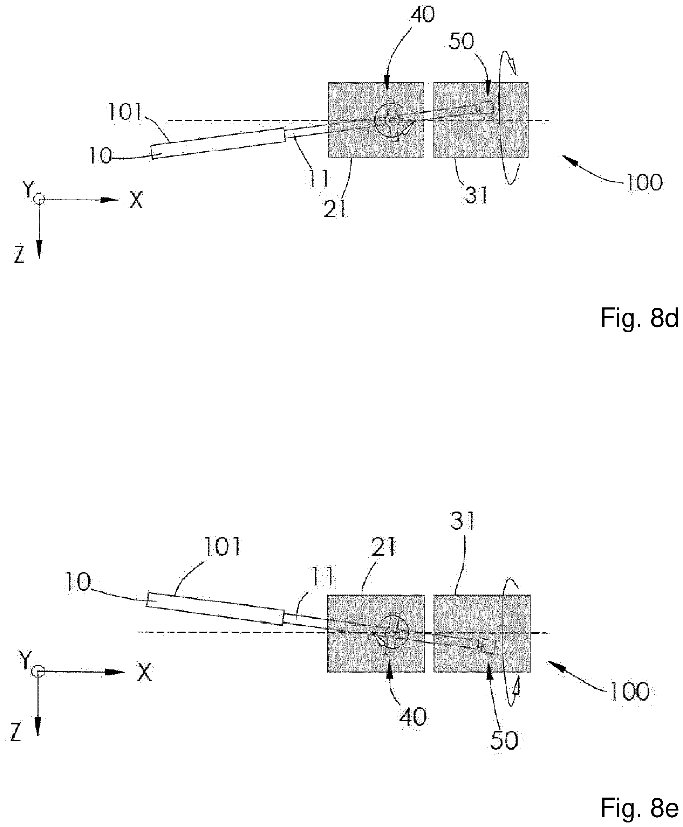

Les figures 6a-6e, 8a-8e présentent le dispositif d'orientation dans un plan XZ, c'est-à-dire un plan formé par les axes X et Z du repère dispositif.

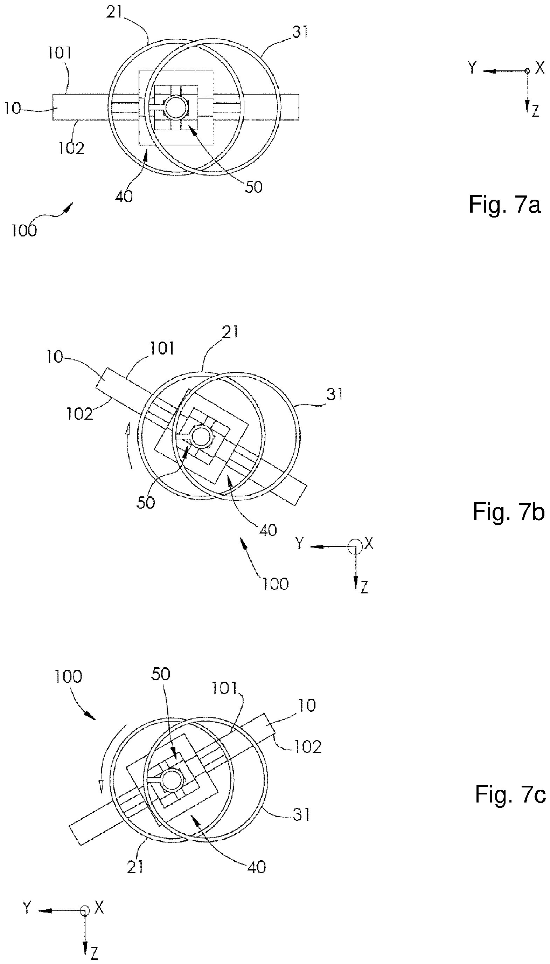

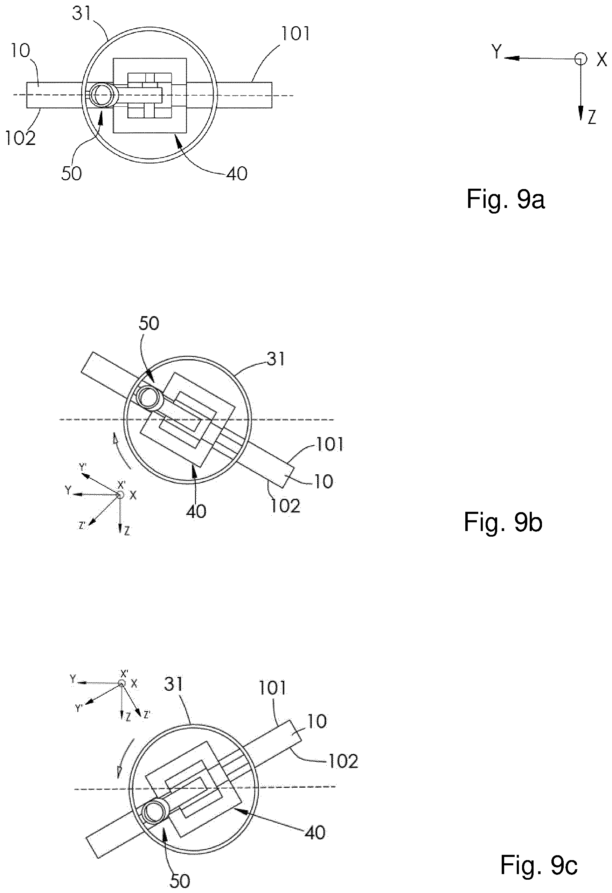

Les figures 7a-7e, 9a-9e présentent le dispositif d'orientation dans un plan YZ, c'est-à-dire un plan formé par les axes Y et Z du repère dispositif.

Le dispositif d'orientation 100 est avantageusement configuré pour orienter le miroir 10 selon l'axe principal X et l'axe secondaire Y. L'axe tertiaire est considéré comme non fonctionnel.

Dans l'exemple préféré où la charge est un miroir 10, la rotation du miroir autour de l'axe principal X est avantageusement utilisée pour sélectionner une scène à analyser, en réalisant un balayage de la terre. La rotation du miroir 10 autour de l'axe secondaire Y est quant à elle avantageusement utilisée pour diriger le miroir afin de compenser la vitesse du véhicule spatial.

Le dispositif d'orientation 100 comporte en premier lieu un premier arbre, dit arbre de transmission 11, destiné à et configuré pour supporter le miroir 10, comme illustré sur les figures 1 et 2.

Le miroir 10 est préférentiellement disposé à une première extrémité de l'arbre de transmission 11.

L'arbre de transmission 11 a pour axe de rotation, un axe dit premier axe de rotation. L'arbre de transmission 11 s'étend ainsi selon l'axe principal X. Dans une configuration initiale, le premier axe de rotation est confondu avec l'axe principal X.

L'arbre de transmission 11 est configuré pour être entrainé en rotation, au centre 0, autour de l'axe principal X et autour de l'axe secondaire Y.

Le dispositif d'orientation 100 comporte en outre un deuxième arbre 21.

Ledit deuxième arbre 21 forme rotor d'un premier moteur électrique d'un premier ensemble motorisation 20.

Ledit deuxième arbre 21 est préférentiellement un arbre creux traversé par l'arbre de transmission 11.

Le deuxième arbre 21 a pour axe de rotation, un axe dit deuxième axe de rotation, confondu avec l'axe principal X. Ledit deuxième arbre s'étend ainsi selon l'axe principal X.

Le deuxième arbre 21 est configuré pour être entrainé uniquement en rotation autour de l'axe principal X.

Le premier ensemble motorisation 20 comporte en outre :
- un stator 22 formant la partie fixe du premier moteur électrique,
- des roulements à billes 23 agencés pour réaliser le guidage du rotor 21 et pour résister à l'environnement du lancement,
- un capteur de position angulaire 24 agencé et configuré pour mesurer la position angulaire réelle du rotor 21, c'est-à-dire du deuxième arbre 21, par rapport au stator 22 et l'utiliser préférentiellement dans une boucle de rétroaction pour contrôler cette position.

Dans une forme préférée de réalisation, le capteur de position angulaire 24 du premier ensemble motorisation 20 est un codeur optique.

Les mouvements du deuxième arbre 21 sont créés, guidés et contrôlés par le premier moteur électrique, les roulements à billes 23 et le capteur de position angulaire 24.

Dans un exemple de réalisation, le premier moteur électrique est un moteur à courant continu sans balai.

L'arbre de transmission 11 et le deuxième arbre 21 sont reliés entre eux par un premier organe de liaison 40.

Le premier organe de liaison 40 est avantageusement placé au niveau du centre 0 du repère dispositif.

Ledit premier organe de liaison est configuré pour interdire des mouvements relatifs entre ledit arbre de transmission et ledit deuxième arbre, de préférence uniquement, selon :
- un degré de liberté en rotation autour de l'axe principal X,
- trois degrés de liberté en translation.

En d'autres termes, le premier organe de liaison 40 :
- bloque la rotation entre l'arbre de transmission 11 et le deuxième arbre 21 autour de l'axe principal X,
- bloque les translations entre l'arbre de transmission 11 et le deuxième arbre 21 selon l'axe principal X, l'axe secondaire Y et l'axe tertiaire Z,
- autorise les rotations entre l'arbre de transmission 11 et le deuxième arbre 21 autour de l'axe secondaire Y et celle autour de l'axe tertiaire Z.

Autrement dit, le premier organe de liaison 40 lie ensemble l'arbre de transmission 11 et le deuxième arbre en translation 21 selon les trois axes (axe principal, axe secondaire et axe tertiaire). Il les lie en rotation selon l'axe principal X. Il laisse libre uniquement les rotations entre l'arbre de transmission 11 et le deuxième arbre 21 selon l'axe secondaire Y et l'axe tertiaire Z.

Le premier organe de liaison 40 est équivalent à une liaison mécanique communément appelée liaison rotule à doigt.

Dans un exemple de réalisation, le premier organe de liaison 40 est un ensemble d'éléments flexibles.

Le premier organe de liaison 40 est calculé en matériau, forme et dimensions de manière à libérer les deux rotations autour de l'axe secondaire Y et tertiaire Z sur les débattements respectifs requis par l'application, tout en bloquant les 4 autres degrés de libertés (les trois translations et une rotation selon l'axe principal X).

La géométrie optimale du premier organe de liaison 40 est à déterminer en fonction des besoins et des contraintes propres à chaque application.

Dans une forme de réalisation, le premier organe de liaison 40 est réalisé sous la forme d'une pièce monolithique comportant quatre sections affinées. Chaque section affinée forme un pivot de base.

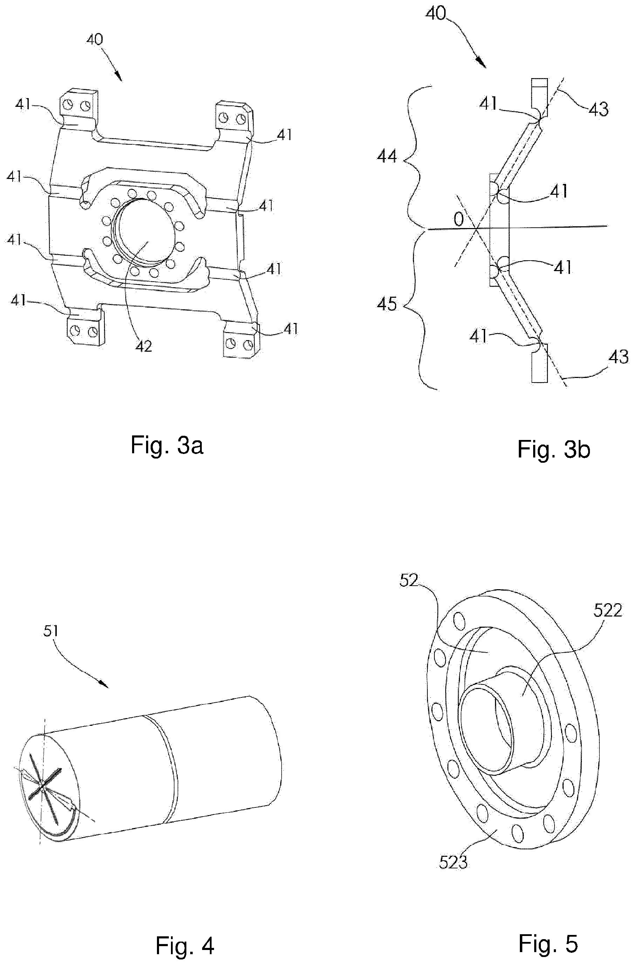

Dans une forme préférée de réalisation, illustrée sur la figure 3a, pour des raisons de contraintes de fabrication, le premier organe de liaison 40 comporte huit sections affinées 41. Ces huit sections affinées sont préférentiellement disposées en deux rangées de quatre sections affinées.

Le premier organe de liaison 40 comporte une ouverture centrale 42 dimensionnée pour recevoir l'arbre de transmission 11.

Un axe de rotation du premier organe de liaison 40 correspond à la droite passant par les intersections de plans droits 43 passant par les centres d'une même rangée de pivots 41 de base de parties supérieure 44 et inférieure 45 du premier organe de liaison 40, lorsque ledit premier organe de liaison est en configuration de repos, comme illustré figure 3b.

Le premier organe de liaison 40 présente un centre de rotation déporté. Le centre de rotation correspond à l'intersection de l'axe de rotation du premier organe de liaison 40 et de l'axe principal X.

Le premier organe de liaison 40 est avantageusement positionné dans le dispositif d'orientation 100 de telle sorte que son centre de rotation est positionné au centre 0 du repère dispositif.

Le premier organe de liaison 40 est avantageusement réalisé dans un matériau en alliage à base de titane, tel que par exemple le TA6V.

Le dispositif d'orientation 100 comporte en outre un troisième arbre 31.

Ledit troisième arbre 31 forme rotor d'un second moteur électrique d'un second ensemble motorisation 30.

Ledit troisième arbre 31 est préférentiellement un arbre creux traversé par l'arbre de transmission 11.

Le troisième arbre 31 a pour axe de rotation, un axe dit troisième axe de rotation 35, de même direction que l'axe principal X. Ledit troisième arbre s'étend selon ledit troisième axe de rotation 35.

Le troisième arbre 31 est configuré pour être entrainé uniquement en rotation autour dudit troisième axe de rotation 35.

Le second ensemble motorisation 30 comporte en outre :
- un stator 32 formant la partie fixe du second moteur électrique,
- des roulements à billes 33 agencés pour réaliser le guidage du rotor 31 et pour résister à l'environnement du lancement,
- un capteur de position angulaire 34 agencé et configuré pour mesurer la position angulaire réelle du rotor 32, c'est-à-dire du troisième arbre 31, par rapport au stator 32 et l'utiliser préférentiellement dans une boucle de rétroaction pour contrôler cette position.

Dans un exemple préféré de réalisation, le capteur de position angulaire 34 du second ensemble motorisation 30 est un codeur optique.

Les mouvements du troisième arbre 31 sont créés, guidés et contrôlés par le second moteur électrique, les roulements à billes 33 et le capteur de position angulaire 34.

Dans un exemple de réalisation, le second moteur électrique est un moteur à courant continu sans balai.

Préférentiellement, le premier ensemble motorisation 20 et le second ensemble motorisation 30 sont identiques.

Le premier ensemble motorisation 20 est agencé entre le miroir 10 et le second ensemble motorisation 30.

L'arbre de transmission 11 et le troisième arbre 31 sont reliés entre eux par un deuxième organe de liaison 50.

Le deuxième organe de liaison 50, l'arbre de transmission 11 et le troisième arbre 31 sont agencés entre eux de façon à former une liaison cinématique de type excentrique.

Ledit deuxième organe de liaison est configuré pour autoriser des mouvements relatifs entre ledit arbre de transmission et ledit troisième arbre, de préférence uniquement, selon :
- un degré de liberté en translation selon le troisième axe de rotation,
- trois degrés de liberté en rotation.

La fonction du deuxième organe de liaison 50 est de convertir une différence d'angles entre le deuxième arbre 21 et le troisième arbre 31 en un déplacement linéaire de la première extrémité de l'arbre de transmission 11 sans transmettre de rotation.

Le deuxième organe de liaison 50 est équivalent à une liaison mécanique communément appelée liaison linéaire annulaire ou liaison sphère/cylindre.

Dans un exemple de réalisation, le deuxième organe de liaison 50 comporte un pivot 51, excentré par rapport au troisième axe de rotation 35 du troisième arbre 31, monté sur une membrane 52. Le pivot 51 et la membrane 52 sont de forme adaptée pour créer une liaison linéaire annulaire.

Le pivot 51 est d'une part fixement solidaire de l'arbre de transmission 11. Le pivot 51 est d'autre part solidaire de la membrane 52. La membrane 52 est quant à elle fixement solidaire du troisième arbre de rotation 31. De préférence, la membrane 52 est fixement solidaire du troisième arbre 31, via un bras 521, comme illustré sur les figures 1 et 2.

On entend par le terme « solidaire » lorsqu'il fait référence à des pièces les unes par rapport aux autres de manière classique en elle-même, que lesdites pièces sont mutuellement liées, un mouvement relatif entre elles pouvant toutefois être possible. Dans la présente description, par convention on désignera par « solidaire », des pièces étant liées l'une à l'autre par une liaison autorisant un mouvement relatif d'une pièce par rapport à l'autre. On désignera par « fixement solidaires » des pièces qui sont mutuellement liées de manière fixe, c'est-à-dire de sorte qu'un mouvement relatif entre elles est impossible.

Préférentiellement, le pivot 51 présente un axe de rotation orienté vers le centre de rotation du premier organe de liaison 40, et donc le centre 0 du repère dispositif, pour réduire les déplacements parasites et les efforts.

Dans un exemple de réalisation du pivot, comme illustré sur la figure 4, ledit pivot est un pivot à lames flexibles de type connu en soi.

Dans une forme de réalisation, ledit pivot est un pivot à lames croisées, c'est à dire composé de lames ayant une même longueur totale de travail et placées orthogonalement. Ces lames relient deux blocs qui peuvent se déplacer l'un par rapport à l'autre. Le pivot réalise un joint tournant et son axe de révolution est l'intersection des deux lames en configuration de repos. Le pivot présente une forme globale externe cylindrique.

Le pivot est calculé en matériau, forme et dimensions de manière à :
- réduire les contraintes de fonctionnement pour augmenter sa durée de vie,
- réduire la rigidité torsionnelle,
- maximiser la résistance au flambage.

La membrane 52 a avantageusement une fonction thermomécanique.

La membrane 52 est une pièce flexible avantageusement utilisée pour compenser les déplacements thermomécaniques. La déformation de la membrane 52 permet avantageusement tout déplacement parasitaire résiduel. La membrane 52 contribue au comportement modal du dispositif d'orientation. La membrane 52 est avantageusement disposée au niveau du plan médian du pivot 51 afin d'être alignée avec un centre du pivot 51. Cette configuration présente également l'avantage d'être plus tolérante aux défauts géométriques. La figure 5 présente un exemple classique de membrane 52. La membrane 52 est représentée par la partie affinée. Elle est comprise entre une première interface interne 522 rigide, cylindrique creuse, qui vient recevoir le pivot 51, et une deuxième interface externe 523 rigide, configurée pour être fixée au troisième arbre 31, préférentiellement via le bras 521.

La membrane 52 est avantageusement réalisée dans un matériau répliquant le comportement thermomécanique du pivot.

Dans une première version du dispositif d'orientation 100, comme illustré sur la figure 1, le troisième axe de rotation 35 du troisième arbre 31 est parallèle distinct de l'axe principal X. Le pivot 51 excentré est quant à lui positionné au niveau de l'axe principal X.

Dans une deuxième version du dispositif d'orientation 100, comme illustré sur la figure 2, le troisième axe de rotation 35 du troisième arbre 31 est parallèle confondu avec l'axe principal X. Le pivot 51 excentré est distant radialement du troisième axe de rotation 35 du troisième arbre 31, donc de l'axe principal X.

Le dispositif d'orientation 100 comporte en outre un bâti externe 60 commun regroupant l'ensemble des éléments constituant le premier ensemble motorisation 20, le deuxième ensemble motorisation 30 et l'arbre de transmission 11.

Le dispositif d'orientation 100 tel que défini par l'invention est adapté pour orienter le miroir 10 principalement selon l'axe principal X et l'axe secondaire Y. La manière d'orienter le miroir 10 par le dispositif d'orientation 100 selon les axes principal X et secondaire Y diffère selon la version du dispositif d'orientation.

### Fonctionnement de la première version du dispositif d'orientation

Pour orienter le miroir selon les axes principal X et Y, Le dispositif d'orientation 100, dans sa première version, est adapté pour réaliser un balayage du miroir 10 principalement selon l'axe principal X et l'axe secondaire Y.

De préférence, le dispositif d'orientation 100 est configuré pour réaliser un grand balayage du miroir autour de l'axe principal X et un petit balayage du miroir autour de l'axe secondaire Y.

Par grand balayage, on entend une rotation sur une plage angulaire jusqu'à 360 °.

Par petit balayage, on entend une rotation sur une plage angulaire maximale de 5 °.

Pour réaliser ces balayages, le dispositif d'orientation 100 est dimensionné à partir de deux paramètres :
- une distance **L** entre le centre du premier organe de liaison 40, donc le centre 0, et le centre du pivot 52 du deuxième organe de liaison 50,
- une distance minimale **e** entre le centre du pivot 52 du deuxième organe de liaison 50 et le troisième axe de rotation 35.

Le choix du dimensionnement des distances **L** et **e** définit le rapport de réduction entre la rotation du troisième arbre 31 et la rotation induite du miroir 10 autour de l'axe secondaire Y, autrement dit le balayage autour de l'axe secondaire Y. Dans un exemple de réalisation, pour assurer un balayage maximal du miroir 10 de 4,5 ° autour de l'axe secondaire Y, **L** et **e** prennent les valeurs suivantes :
**L =** 231,356 mm,
**e =** 18,172 mm.

L'homme du métier saura adapter les dimensions au balayage recherché.

Les figures 6a à 7e sont des représentations très schématiques non limitatives de la première version du dispositif d'orientation 100, où sont uniquement présentés :
- le miroir 10,
- l'arbre de transmission 11, représenté sous la forme non limitative d'une barre de section carrée,
- le deuxième arbre 21, représenté sous la forme non limitative d'un cylindre creux de section circulaire,
- le troisième arbre 31, représenté sous la forme non limitative d'un cylindre creux de section circulaire,
- le premier organe de liaison 40,
- le deuxième organe de liaison 50.

Les figures 6a à 6e sont des vues dans le plan XZ du dispositif d'orientation 100. Sur ces figures 6a à 6e, le deuxième arbre 21 et le troisième arbre 31 sont représentés en transparence, afin de visualiser le premier organe de liaison 40 et le deuxième organe de liaison 50 et leur déplacement.

Les figures 7a à 7e sont des vues dans le plan YZ du dispositif d'orientation 10. Il est clairement visible sur ces figures que le deuxième arbre 21 et le troisième arbre 31 sont décalés dans le plan YZ.

Dans la configuration initiale, illustrée sur les figures 6a et 7a, le miroir 10 présente des faces 101, 102 parallèles au plan XY du repère dispositif. La face 101 correspond à la face réfléchissante et la face 102 correspond au dos du miroir.

Pour effectuer une rotation du miroir 10 autour de l'axe principal X, seul le deuxième arbre 21 est entrainé en rotation autour de l'axe principal X. Le troisième arbre 31 est bloqué en rotation autour de son troisième axe de rotation 35.

Les figures 7b et 7c mettent en évidence que le troisième arbre 31 est resté en position immobile, le positionnement du deuxième organe de liaison 50 n'ayant pas évolué dans le plan YZ par rapport à sa position en figure 7a. La figure 7b, respectivement la figure 7c, met également en évidence que le deuxième arbre 21 a effectué une rotation autour de l'axe principal X en sens horaire (vers la droite sur la figure 7b), respectivement en sens antihoraire (vers la gauche sur la figure 7c).

Le premier organe de liaison 40 lie en rotation selon l'axe principal X le deuxième arbre 21 avec l'arbre de transmission 11. Ainsi, la rotation du deuxième arbre 21 autour de l'axe principal X entraine une rotation identique du premier organe de liaison 40 autour de l'axe principal X, et en suivant une rotation de l'arbre de transmission 11 également autour de l'axe principal X, comme illustré sur les figures 6b, 6c, 7b et 7c.

Le miroir 10 étant lié à l'arbre de transmission 11, une rotation dudit arbre de transmission 11 autour de l'axe principal X génère automatiquement une rotation du miroir 10 autour de l'axe principal X.

Le miroir 10 peut ainsi avantageusement effectuer une rotation complète autour de l'axe principal X, c'est-à-dire une rotation de 360°.

Pour obtenir une rotation du miroir 10 autour de l'axe secondaire Y, seul le troisième arbre 31 est entraîné en rotation autour de son troisième axe de rotation 35. Le deuxième arbre 21 est quant à lui bloqué en rotation autour de l'axe principal X.

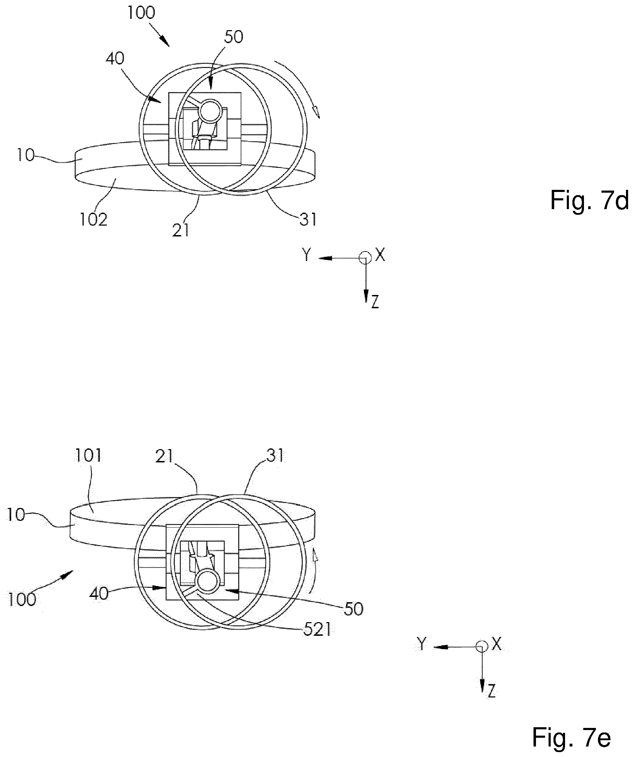

Les figures 7d et 7e mettent en évidence que le deuxième arbre 21 est resté en position immobile, le positionnement du premier organe de liaison 40 n'ayant pas évolué dans le plan YZ par rapport à sa position en figure 7a. La figure 7d, respectivement la figure 7e, met également en évidence que le troisième arbre 31 a effectué une rotation autour du troisième axe de rotation 35, en sens horaire (vers la droite sur la figure 7d), respectivement en sens anti-horaire (vers la gauche sur la figure 7e).

Une rotation du troisième arbre 31 autour de son troisième axe de rotation 35 entraine une rotation du deuxième organe de liaison 50 uniquement autour du troisième axe de rotation 35. L'arbre de transmission 11 est fixement solidaire au pivot 51 du deuxième organe de liaison 50. En effectuant une rotation du troisième arbre 31 autour du troisième axe de rotation 35, la rotation du pivot 51 du deuxième organe de liaison 50 peut être assimilée à un déplacement selon l'axe tertiaire Z. Ce déplacement entraine une rotation de l'arbre de transmission 11 autour de l'axe secondaire Y, via le premier organe de liaison 40.

Le miroir 10 étant lié à l'arbre de transmission 11, une rotation dudit arbre de transmission autour de l'axe secondaire Y génère automatiquement une rotation du miroir 10 autour dudit axe secondaire.

La rotation du deuxième organe de liaison 50 autour du troisième axe de rotation 35 entraine également une légère rotation non fonctionnelle autour de l'axe tertiaire Z.

### Fonctionnement de la deuxième version du dispositif d'orientation

Pour cette deuxième version du dispositif d'orientation, on associe audit dispositif d'orientation, outre le repère dispositif, un autre repère orthonormé. Cet autre repère, dénommé deuxième repère, est un repère solidaire du deuxième arbre 21. Ce deuxième repère comprend trois axes X'Y'Z' orthogonaux entre eux. Le deuxième repère présente le même centre 0 que le repère dispositif. Les trois axes X'Y'Z' de ce deuxième repère sont confondus avec les trois axes XYZ du repère dispositif, dans la configuration initiale (c'est-à-dire telle que représentée sur la figure 2). Les trois axes X'Y'Z' de ce deuxième repère sont représentés sur les figures 9b et 9c, ainsi que les trois axes XYZ du repère dispositif, lorsque le dispositif d'orientation n'est pas dans la configuration initiale. Pour orienter le miroir selon les axes principal X et Y, le dispositif d'orientation 100, dans sa deuxième version, est adapté pour réaliser un balayage du miroir 10 principalement selon l'axe principal X et l'axe Y'.

De préférence, le dispositif d'orientation 100 est configuré pour réaliser un grand balayage du miroir autour de l'axe principal X et un petit balayage du miroir autour de l'axe Y'.

Par grand balayage, on entend une rotation sur une plage angulaire jusqu'à 360 °.

Par petit balayage, on entend une rotation sur une plage angulaire maximale de 5 °.

Pour réaliser ces balayages, le dispositif d'orientation 100 est dimensionné à partir de deux paramètres :
- une distance **L'** entre le centre du premier organe de liaison 40, donc le centre 0, et la projection sur l'axe principal X du centre du pivot 52 du deuxième organe de liaison 50,
- une distance minimale **e'** entre le centre du pivot 52 du deuxième organe de liaison 50 et le troisième axe de rotation 35.

Le choix du dimensionnement des distances **L'** et **e'** définit le rapport de réduction entre la rotation du troisième arbre 31 et la rotation induite du miroir 10 autour de l'axe Y', autrement dit le balayage autour de l'axe Y'.

Dans un exemple de réalisation, pour assurer un balayage maximal du miroir 10 de 4,5 ° autour de l'axe Y', **L'** et **e'** prennent les valeurs suivantes :
**L'** = 231,356 mm,
**e'** = 18,172 mm.

L'homme du métier saura adapter les dimensions au balayage recherché.

De même que pour les figures 6a à 7e, les figures 8a à 9e sont des représentations très schématiques non limitatives de la deuxième version du dispositif d'orientation 100, avec les mêmes éléments représentés que ceux en figures 6a à 7e.

Les figures 8a à 8e sont des vues dans le plan XZ du dispositif d'orientation 100. Sur ces figures 8a à 8e, le deuxième arbre 21 et le troisième arbre 31 sont représentés en transparence, afin de visualiser le premier organe de liaison 40 et le deuxième organe de liaison 50 et leur déplacement.

Les figures 9a à 9e sont des vues dans le plan YZ du dispositif d'orientation 100. Il est clairement visible sur ces figures que le deuxième arbre 21 et le troisième arbre 31 ont pour même axe de rotation l'axe principal X.

Les figures 8a et 9a illustrent le positionnement du miroir 10 dans la configuration initiale, de manière identique aux figures 6a et 7a.

Pour effectuer une rotation du miroir 10 autour de l'axe principal X, le deuxième arbre 21 et le troisième arbre 31 sont simultanément entraînés en rotation autour dudit axe principal X.

Les figures 9b et 9c mettent en évidence que les deuxième et troisième arbres 21, 31 ont effectué une rotation synchronisée de même amplitude, le positionnement des premier et deuxième organes de liaison 40, 50 ayant évolué par rapport à leur position en figure 9a. La figure 9b, respectivement la figure 9c, met également en évidence que les deuxième et troisième arbres 21, 31 ont effectué une rotation synchronisée de même amplitude autour de l'axe principal X en sens horaire, respectivement en sens antihoraire (vers la droite sur la figure 9b, respectivement vers la gauche sur la figure 9c).

Une rotation synchronisée des deuxième et troisième arbres 21, 31 autour de l'axe principal X entraîne une rotation synchronisée des deuxième et troisième organes de liaison 40, 50 autour de l'axe principal X. L'arbre de transmission 11 est fixement solidaire de l'organe de liaison 40 et du pivot 51 du deuxième organe de liaison 50, ainsi la rotation synchronisée entraine également une rotation de l'arbre de transmission 11 autour de l'axe principal X, comme illustré sur les figures 8b, 8c, 9b et 9c.

Pour obtenir une rotation du miroir 10 autour de l'axe Y', seul le troisième arbre 31 est entraîné en rotation autour de son troisième axe de rotation 35. Le deuxième arbre 21 est quant à lui bloqué en rotation autour de l'axe principal X.

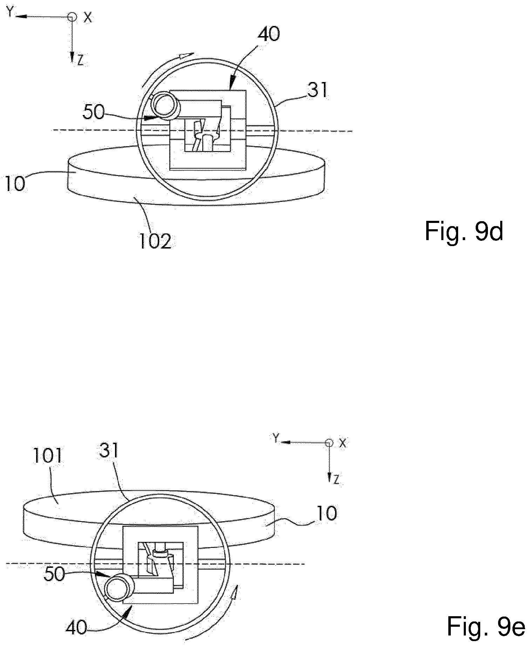

Les figures 9d et 9e mettent en évidence que le deuxième arbre 21 est resté en position immobile, le positionnement du premier organe de liaison 40 n'ayant pas évolué dans le plan YZ par rapport à sa position en figure 9a. La figure 9d, respectivement la figure 9e, met également en évidence que le troisième arbre 31 a effectué une rotation autour de l'axe principal X en sens horaire, respectivement en sens antihoraire (vers la droite sur la figure 9d, respectivement vers la gauche sur la figure 9e).

Une rotation du troisième arbre 31 autour de l'axe principal X entraine une rotation du deuxième organe de liaison 50 uniquement autour de l'axe principal X. L'arbre de transmission 11 est fixement solidaire au pivot 51 du deuxième organe de liaison 50. En effectuant une rotation du troisième arbre 31 autour de l'axe principal X, la rotation du pivot 51 du deuxième organe de liaison 50 peut être assimilée à un déplacement selon un axe parallèle à l'axe tertiaire Z. Ce déplacement entraine une rotation de l'arbre de transmission 11 autour de l'axe Y', via le premier organe de liaison 40.

Le miroir 10 étant lié à l'arbre de transmission 11, une rotation dudit arbre de transmission autour de l'axe Y' génère automatiquement une rotation du miroir 10 autour dudit axe Y'.

La rotation du deuxième organe de liaison 50 autour du troisième axe de rotation 35 entraine également une légère rotation non fonctionnelle autour de l'axe tertiaire Z.

Dans un mode de réalisation amélioré de la deuxième version du dispositif d'orientation 100, ledit dispositif d'orientation comporte un dispositif anti-rotation 70.

En effet, lors du lancement d'un véhicule spatial comportant un dispositif d'orientation 100, l'environnement mécanique crée des sollicitations très fortes sur ledit dispositif d'orientation. Les déplacements du miroir 10 doivent aussi être limités afin de :
- garantir que le miroir 10 reste dans une position dite de sécurité ou bloquée pendant le lancement avec une certaine précision ;
- éviter les chocs.

Le dispositif anti-rotation 70 est disposé préférentiellement à une seconde extrémité 112 de l'arbre de transmission 11, à l'opposé de la première extrémité 111 où est fixé le miroir 10, comme illustré sur les figures 2 et 10 à 12c.

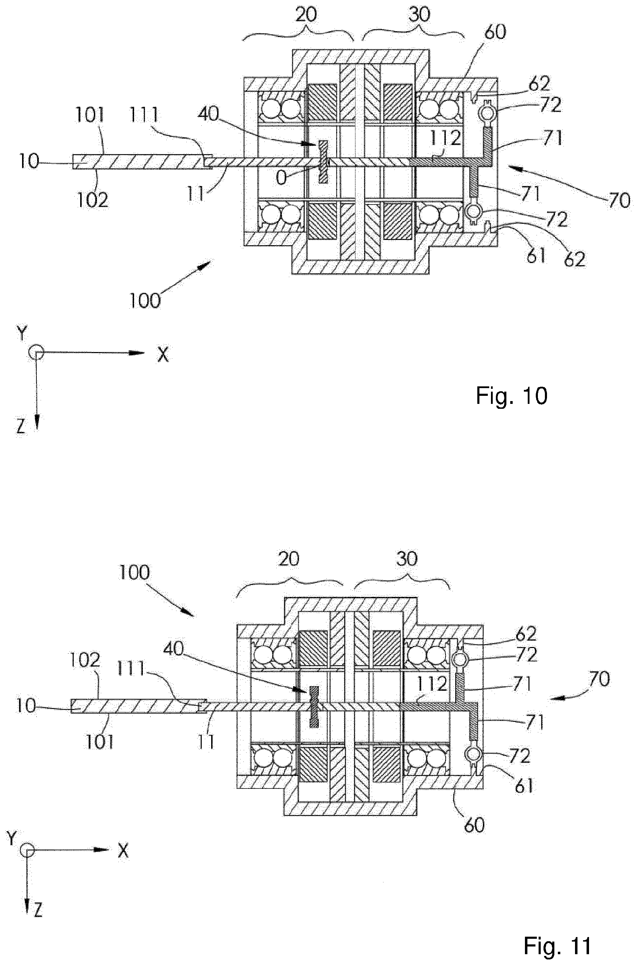

La figure 10 illustre le positionnement du miroir 10 et du dispositif anti-rotation 70 en configuration initiale et opérationnelle.

La figure 11 illustre le positionnement du miroir 10 et du dispositif anti-rotation 70 en configuration bloquée et donc non opérationnelle.

Entre les deux configurations, le miroir 10 a pivoté de 180° autour de l'axe principal X.

On comprend que l'insertion du dispositif anti-rotation 70 réduit la plage angulaire opérationnelle du balayage du miroir autour de l'axe principal X. Cette plage angulaire est préférentiellement inférieure à 360 °, encore plus préférentiellement de l'ordre de 340 °.

Le dispositif anti-rotation 70 comporte :
- un premier ensemble pour éviter un balayage du miroir 10 selon l'axe Y' lors du lancement,
- un second ensemble pour éviter un balayage du miroir 10 selon l'axe principal X lors du lancement.

Le premier ensemble comporte d'une part deux bras 71, s'étendant radialement chacun depuis l'arbre de transmission 11 vers le bâti externe 60. Les deux bras 71 s'étendent de préférence de manière diamétralement opposée. Les deux bras 71 sont décalés entre eux sur l'axe principal X, c'est-à-dire qu'ils ne sont pas dans le même plan YZ.

Chaque bras 71 se termine par une butée.

Le premier ensemble comporte d'autre part deux protubérances 62 disposées sur une face interne 61 du bâti externe 60.

Le bâti externe 60 est préférentiellement de forme cylindrique au niveau de la seconde extrémité 112 de l'arbre de transmission 11.

Une première protubérance 62 est disposée dans le plan YZ contenant un premier bras 71. Une seconde protubérance 62 est disposée dans le plan YZ contenant un second bras 71.

Les protubérances 62 sont préférentiellement diamétralement opposées.

Les butées 72 et les protubérances 62 sont configurées en forme et dimension de sorte que lesdites butées coopèrent, avec un faible jeu, avec lesdites protubérances du bâti externe 60, lorsque le dispositif d'orientation 100 est dans la configuration bloquée.

Dans un exemple de réalisation, les bras 71 sont réalisés dans un matériau polymère, par exemple en polyétheréthercétone (PEEK) pour assurer leur rigidité.

Dans un exemple de réalisation, les butées 72 sont réalisées dans un matériau élastomère, par exemple en smactane^{®}, pour augmenter l'amortissement.

Le deuxième ensemble comporte d'une part une lame 73, de préférence flexible, s'étendant radialement d'une extrémité du troisième arbre 31 vers la face interne 61 du bâti externe 60. La lame 73 est disposée dans un plan YZ, distinct de ceux des deux bras 71.

Le deuxième ensemble comporte d'autre part un élément magnétique 74, par exemple un aimant, disposé fixement sur la face interne 61 du bâti externe 60. La lame 73 est dimensionnée en longueur pour pouvoir venir se plaquer contre l'élément magnétique 74.

La lame 73 comporte en outre une partie ferromagnétique 731 en son extrémité libre venant contre l'élément magnétique 74.

Le couple généré est suffisamment élevé pour répondre aux besoins du dispositif anti-rotation 70 et suffisamment bas pour permettre le désengagement dudit dispositif anti-rotation avec les premier et second moteurs électriques (pas de nécessité d'actionneur externe).

La lame 73 et l'élément magnétique 74 sont positionnés dans le dispositif d'orientation 100 de telle sorte que, lorsque les butées 72 coopèrent avec les protubérances 62 du premier ensemble, la lame 73 vient en appui contre l'élément magnétique 74 et bloque la rotation du miroir 10.

L'élément magnétique 74 présente ainsi la double fonction de bloquer la rotation du miroir 10 selon l'axe principal X et d'empêcher les butées 72 de se dégager des protubérances 62.

Dans un exemple de réalisation, la lame 73 est réalisée dans un matériau flexible, par exemple en un alliage de cuivre et béryllium.

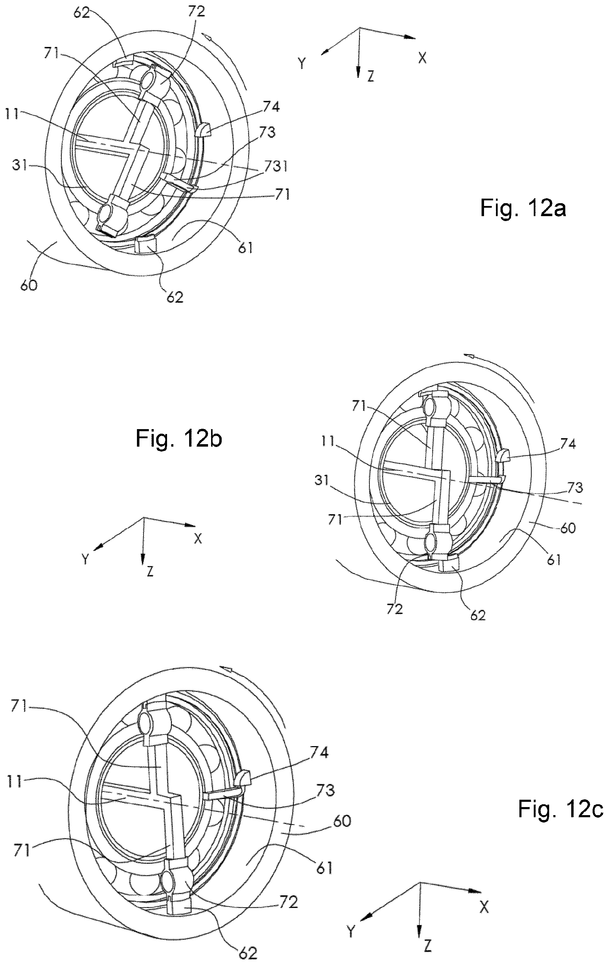

Les figures 12a à 12c illustrent le passage du dispositif d'orientation en configuration bloquée.

Lorsqu'il est souhaité placer le dispositif d'orientation 100 en configuration bloquée, pour le lancement, l'arbre de transmission 11 est soumis à une rotation autour de l'axe principal X, entrainant d'un coté le miroir 10 et d'un autre coté le dispositif anti-rotation 70, jusqu'à ce que :
- les butées 72 s'engagent respectivement et simultanément, avec un faible jeu, dans leurs protubérances 62 respectives du bâti externe 60,
- la lame 73 vient se plaquer simultanément contre l'élément magnétique 74.

## Revendications

1. Dispositif d'orientation (100) d'une charge (10), auquel est associé un repère dispositif orthonormé XYZ, de centre 0, le dispositif d'orientation étant destiné à orienter ladite charge autour d'un axe longitudinal X, dit axe principal, et d'un axe transversal Y, dit axe secondaire, le dispositif d'orientation comportant :
- un premier arbre, dit arbre de transmission (11), destiné à supporter ladite charge, configuré pour être entraîné en rotation, au centre 0, autour de l'axe principal X et de l'axe secondaire Y,
- un deuxième arbre (21), configuré pour être entraîné en rotation autour de l'axe principal X,
- un troisième arbre (31) configuré pour être entraîné en rotation autour d'un troisième axe de rotation (35), de même direction que l'axe principal X,
- un premier organe de liaison (40) entre l'arbre de transmission (11) et le deuxième arbre (21), configuré pour interdire des mouvements relatifs entre ledit arbre de transmission et ledit deuxième arbre suivant d'une part un degré de liberté en rotation autour de l'axe principal et d'autre part trois degrés de liberté en translation,
- un deuxième organe de liaison (50) entre l'arbre de transmission (11) et le troisième arbre (31) et configuré pour autoriser des mouvements relatifs entre ledit arbre de transmission et ledit troisième arbre suivant d'une part un degré de liberté de translation le long du troisième axe de rotation (35) et d'autre part trois degrés de liberté en rotation,
le deuxième organe de liaison (50), l'arbre de transmission (11) et le troisième arbre (31) formant une liaison cinématique de type excentrique.

2. Dispositif d'orientation (100) selon la revendication 1 dans lequel le deuxième arbre (21) et le troisième arbre (31) sont des arbres creux traversés par l'arbre de transmission (11).

3. Dispositif d'orientation (100) selon l'une des revendications précédentes dans lequel le premier organe de liaison (40) est un ensemble d'éléments flexibles.

4. Dispositif d'orientation (100) selon l'une des revendications précédentes dans lequel le deuxième organe de liaison (50) comporte un pivot (51), excentré par rapport au troisième axe de rotation (35) du troisième arbre (31), monté sur une membrane (52), ledit pivot étant fixement solidaire de l'arbre de transmission (11) et ladite membrane fixement solidaire dudit troisième arbre (31).

5. Dispositif d'orientation (100) selon la revendication 4 dans lequel le troisième axe de rotation (35) du troisième arbre (31) est distinct de l'axe principal X, le pivot (51) du deuxième organe de liaison (50) étant positionné sur l'axe principal.

6. Dispositif d'orientation (100) selon la revendication 4 dans lequel le troisième axe de rotation (35) du troisième arbre (31) est confondu avec l'axe principal (X), le pivot (51) du deuxième organe de liaison (50) étant radialement distant dudit troisième axe de rotation (35).

7. Dispositif d'orientation (100) selon la revendication 6 dans lequel un deuxième repère orthonormé X'Y'Z', de centre O, est associé au deuxième arbre et dans lequel le dispositif d'orientation comporte un dispositif anti-rotation (70) configuré pour empêcher les balayages de la charge (10) autour de l'axe principal X et de l'axe Y', et placer le dispositif d'orientation (100) dans une configuration non opérationnelle, dite bloquée.

8. Dispositif d'orientation (100) selon la revendication 7 dans lequel le dispositif anti-rotation (70) comporte un premier ensemble configuré pour empêcher un balayage du miroir (10) selon l'axe Y'.

9. Dispositif d'orientation (100) selon la revendication 8 dans lequel le premier ensemble comporte :
- deux bras (71), s'étendant chacun radialement depuis l'arbre de transmission (11) vers un bâti externe dudit dispositif d'orientation, et se terminant chacun par une butée (72), lesdits deux bras étant disposés dans deux plans YZ distincts,
- deux protubérances (62) disposées sur une face interne (61) du bâti externe (60), une protubérance dans chaque plan YZ contenant un bras radial,
les butées (72) et protubérances (62) étant configurées de sorte que lesdites butées coopèrent, avec un faible jeu, avec lesdites protubérances du bâti externe (60), lorsque le dispositif d'orientation (100) est dans la configuration bloquée.

10. Dispositif d'orientation (100) selon l'une des revendications 7 à 9 dans lequel le dispositif anti-rotation (70) comporte un second ensemble configuré pour empêcher un balayage du miroir (10) selon l'axe principal X.

11. Dispositif d'orientation (100) selon la revendication 10 dans lequel le second ensemble comporte :
- une lame (73), flexible, s'étendant radialement depuis le troisième arbre (31) vers le bâti externe (60), comportant une partie ferromagnétique (731) en une extrémité libre,
- un élément magnétique (74) disposé fixement sur la face interne (61) du bâti externe (60),
la lame (73) et l'élément magnétique (74) étant positionnés dans le dispositif d'orientation (100) de telle sorte que, lorsque les butées (72) coopèrent avec les protubérances (62) du premier ensemble, la lame (73) vient en appui contre l'élément magnétique (74), plaçant le dispositif d'orientation dans la configuration bloquée.

## Patentansprüche

1. Ausrichtungsvorrichtung (100) für eine Last (10), der ein orthonormiertes Koordinatensystem XYZ mit dem Mittelpunkt 0 zugeordnet ist, wobei die Ausrichtungsvorrichtung dazu bestimmt ist, die Last um eine Längsachse X, die sogenannte Hauptachse, und eine Querachse Y, die sogenannte Nebenachse, auszurichten, wobei die Orientierungsvorrichtung Folgendes umfasst:
- eine erste Welle, die sogenannte Getriebewelle (11), die dazu bestimmt ist, die Last zu tragen, und dazu konfiguriert ist, im Mittelpunkt 0 um die Hauptachse X und die Nebenachse Y drehangetrieben zu werden,
- eine zweite Welle (21), die dazu konfiguriert ist, um die Hauptachse X drehangetrieben zu werden,
- eine dritte Welle (31), die dazu konfiguriert ist, um eine dritte Drehachse (35) in der gleichen Richtung wie die Hauptachse X drehangetrieben zu werden,
- eine erste Verbindungskomponente (40) zwischen der Getriebewelle (11) und der zweiten Welle (21), die dazu konfiguriert ist, Relativbewegungen zwischen der Getriebewelle und der zweiten Welle in einem Freiheitsgrad in der Rotation um die Hauptachse einerseits und in drei Freiheitsgraden in der Translation zu verhindern,
- eine zweite Verbindungskomponente (50) zwischen der Getriebewelle (11) und der dritten Welle (31) und dazu konfiguriert, Relativbewegungen zwischen der Getriebewelle und der dritten Welle in einem Freiheitsgrad in der Translation entlang der dritten Drehachse (35) einerseits und drei Freiheitsgrade in der Rotation andererseits zu ermöglichen,
wobei die zweite Verbindungskomponente (50), die Getriebewelle (11) und die dritte Welle (31) eine kinematische Verbindung vom Exzentertyp bilden.

2. Ausrichtungsvorrichtung (100) nach Anspruch 1, wobei die zweite Welle (21) und die dritte Welle (31) Hohlwellen sind, durch die die Getriebewelle (11) verläuft.

3. Ausrichtungsvorrichtung (100) nach einem der vorhergehenden Ansprüche, wobei die erste Verbindungskomponente (40) eine Anordnung flexibler Elemente ist.

4. Ausrichtungsvorrichtung (100) nach einem der vorhergehenden Ansprüche, wobei die zweite Verbindungskomponente (50) einen Drehpunkt (51) umfasst, der relativ zur dritten Drehachse (35) der dritten Welle (31) exzentrisch ist und auf einer Membran (52) montiert ist, wobei der Drehpunkt fest mit der Getriebewelle (11) verbunden ist und die Membran fest mit der dritten Welle (31) verbunden ist.

5. Ausrichtungsvorrichtung (100) nach Anspruch 4, wobei sich die dritte Drehachse (35) der dritten Welle (31) von der Hauptachse X unterscheidet und der Drehpunkt (51) der zweiten Verbindungskomponente (50) auf der Hauptachse positioniert ist.

6. Ausrichtungsvorrichtung (100) nach Anspruch 4, wobei die dritte Drehachse (35) der dritten Welle (31) mit der Hauptachse (X) zusammenfällt und der Drehpunkt (51) der zweiten Verbindungskomponente (50) radial von der dritten Drehachse (35) entfernt ist.

7. Ausrichtungsvorrichtung (100) nach Anspruch 6, wobei der zweiten Welle ein zweites orthonormiertes Koordinatensystem X'Y'Z' mit dem Mittelpunkt 0 zugeordnet ist und wobei die Ausrichtungsvorrichtung eine Verdrehsicherungsvorrichtung (70) umfasst, die dazu konfiguriert ist, das Schwenken der Last (10) um die Hauptachse X und die Achse Y' zu verhindern und die Ausrichtungsvorrichtung (100) in eine nicht betriebsbereite, sogenannte blockierte Konfiguration zu versetzen.

8. Ausrichtungsvorrichtung (100) nach Anspruch 7, wobei die Verdrehsicherungsvorrichtung (70) eine erste Anordnung umfasst, die dazu konfiguriert ist, ein Schwenken des Spiegels (10) um die Achse Y' zu verhindern.

9. Ausrichtungsvorrichtung (100) nach Anspruch 8, wobei die erste Anordnung Folgendes umfasst:
- zwei Arme (71), die sich jeweils radial von der Getriebewelle (11) zu einem Außenrahmen der Ausrichtungsvorrichtung erstrecken und jeweils in einem Anschlag (72) enden, wobei die beiden Arme in zwei unterschiedlichen Ebenen YZ angeordnet sind,
- zwei Vorsprünge (62), die auf einer Innenseite (61) des Außenrahmens (60) angeordnet sind, wobei ein Vorsprung in jeder Ebene YZ einen radialen Arm enthält,
wobei die Anschläge (72) und Vorsprünge (62) so konfiguriert sind, dass die Anschläge mit einem kleinen Spiel mit den Vorsprüngen des Außenrahmens (60) zusammenwirken, wenn sich die Ausrichtungsvorrichtung (100) in der blockierten Konfiguration befindet.

10. Ausrichtungsvorrichtung (100) nach einem der Ansprüche 7 bis 9, wobei die Verdrehsicherungsvorrichtung (70) eine zweite Anordnung umfasst, die dazu konfiguriert ist, ein Schwenken des Spiegels (10) um die Hauptachse X zu verhindern.

11. Ausrichtungsvorrichtung (100) nach Anspruch 10, wobei die zweite Anordnung Folgendes umfasst:
- ein flexibles Blatt (73), das sich radial von der dritten Welle (31) zum Außenrahmen (60) erstreckt und an einem freien Ende einen ferromagnetischen Teil (731) aufweist,
- ein magnetisches Element (74), das fest auf der Innenseite (61) des Außenrahmens (60) angeordnet ist,
wobei das Blatt (73) und das magnetische Element (74) so in der Ausrichtungsvorrichtung (100) positioniert sind, dass, wenn die Anschläge (72) mit den Vorsprüngen (62) der ersten Anordnung zusammenwirken, das Blatt (73) am magnetischen Element (74) anliegt und die Ausrichtungsvorrichtung in die blockierte Konfiguration versetzt.

## Claims

1. Device (100) for orienting a load (10), with which is associated an orthonormal device reference frame XYZ, with centre 0, the orientation device being intended to orient said load about a longitudinal axis X, called main axis, and a transverse axis Y, called secondary axis, the orientation device including:
- a first shaft, called transmission shaft (11), intended to support said load, configured to be rotated, at centre 0, about the main axis X and the secondary axis Y,
- a second shaft (21), configured to be rotated about the main axis X,
- a third shaft (31) configured to be rotated about a third axis of rotation (35), in the same direction as the main axis X,
- a first connection component (40) between the transmission shaft (11) and the second shaft (21), configured to prevent relative movements between said transmission shaft and said second shaft in, on the one hand, a degree of rotational freedom about the main axis and, on the other hand, three degrees of translational freedom,
- a second connection component (50) between the transmission shaft (11) and the third shaft (31) and configured to allow relative movements between said transmission shaft and said third shaft in, on the one hand, a degree of translational freedom along the third axis of rotation (35) and, on the other hand, three degrees of rotational freedom,
the second connection component (50), the transmission shaft (11) and the third shaft (31) forming an eccentric kinematic connection.

2. Orientation device (100) according to claim 1 wherein the second shaft (21) and the third shaft (31) are hollow shafts through which the transmission shaft (11) passes.

3. Orientation device (100) according to one of the preceding claims, wherein the first connection component (40) is a set of flexible elements.

4. Orientation device (100) according to one of the preceding claims wherein the second connection component (50) includes a pivot (51), which is eccentric relative to the third axis of rotation (35) of the third shaft (31), mounted on a membrane (52), said pivot being solidly attached to the transmission shaft (11) and said membrane solidly attached to said third shaft (31).

5. Orientation device (100) according to claim 4 wherein the third axis of rotation (35) of the third shaft (31) is distinct from the main axis X, the pivot (51) of the second connection component (50) being positioned on the main axis.

6. Orientation device (100) according to claim 4 wherein the third axis of rotation (35) of the third shaft (31) coincides with the main axis (X), the pivot (51) of the second connection component (50) being radially distant from said third axis of rotation (35).

7. Orientation device (100) according to claim 6 wherein a second orthonormal reference frame X'Y'Z', with centre O, is associated with the second shaft and wherein the orientation device includes an anti-rotation device (70) configured to prevent the load (10) from sweeping about the main axis X and the axis Y', and place the orientation device (100) in a non-operational configuration, called blocked configuration.

8. Orientation device (100) according to claim 7 wherein the anti-rotation device (70) includes a first assembly configured to prevent the mirror (10) from sweeping about the axis Y'.

9. Orientation device (100) according to claim 8 wherein the first assembly includes:
- two arms (71), each extending radially from the transmission shaft (11) towards an external frame of said orientation device, and each ending in a stop (72), said two arms being disposed in two distinct planes YZ,
- two protrusions (62) disposed on an internal face (61) of the external frame (60), one protrusion in each plane YZ containing a radial arm,
the stops (72) and protrusions (62) being configured so that said stops cooperate, with a small clearance, with said protrusions of the external frame (60), when the orientation device (100) is in the blocked configuration.

10. Orientation device (100) according to one of claims 7 to 9 wherein the anti-rotation device (70) includes a second assembly configured to prevent the mirror (10) from sweeping about the main axis X.

11. Orientation device (100) according to claim 10 wherein the second assembly includes:
- a flexible blade (73) extending radially from the third shaft (31) towards the external frame (60), including a ferromagnetic portion (731) at a free end,
- a magnetic element (74) fixedly disposed on the internal face (61) of the external frame (60),
the blade (73) and the magnetic element (74) being positioned in the orientation device (100) such that, when the stops (72) cooperate with the protrusions (62) of the first assembly, the blade (73) bears against the magnetic element (74), placing the orientation device in the blocked configuration.
